# EUROPÄISCHE PATENTSCHRIFT

(11) **EP 0 405 339 B1**
(45) Veröffentlichungstag und Bekanntmachung des Hinweises auf die Patenterteilung: **23.02.1994**
(21) Anmeldenummer: 90111800.0
(22) Anmeldetag: 21.06.1990
(51) Int. Cl.: F16K 31/365

(54) **Membrangesteuertes Differenzdruck-Regelventil**
Diaphragm controlled differential pressure control valve
Soupape de réglage à pression différentielle actionnée par membrane

(30) Priorität: 26.06.1989 YU 1298/89
(43) Veröffentlichungstag der Anmeldung: 02.01.1991
(73) Patentinhaber: Medvescek, Milan, 68250 Brezice (YU)
(72) Erfinder: Medvescek, Milan, 68250 Brezice (YU)
(74) Vertreter: Viering, Jentschura & Partner

(56) Entgegenhaltungen:
- EP-A- 0 354 427
- CH-A- 376 736

## Beschreibung

Die Erfindung betrifft ein membrangesteuertes Differenzdruck-Regelventil insbesondere für Warmwasser-Heizungsanlagen, mit einem Reglergehäuse, in dem ein mit einem Ventilsitz zusammenwirkender Ventilteller über eine am Reglergehäuse abgedichtet geführte Kolbenstange mit einer zwischen Membrantellern eingespannten Membran verbunden ist, von welcher eine Gehäusekammer in eine ventilsitzseitige Minusdruckkammer, die mit dem Minusdruck des Raumes vor dem Ventilsitz beaufschlagt ist, und eine Plusdruckkammer unterteilt wird, die mit dem Plusdruck der von dem Regelventil geregelten Anlage beaufschlagt ist, und welche von einer einstellbaren Federanordnung in der dem Ventilsitz abgewandten Richtung belastet ist. Ein derartiges Differenzdruck-Regelventil ist als allgemeiner Stand der Technik bekannt.

Das erfindungsgemäße Regelventil ist anwendbar zur Differenzdruckregelung und Mengenregelung von Flüssigkeiten und Gasen insbesondere in Heizungs- und Klimaanlagen.

Bei bekannten membrangesteuerten Differenzdruck-Regelventilen ist die die Membran belastende Federanordnung außerhalb des Reglergehäuses angeordnet, damit sie einstellbar ist, und mit den Membrantellern über eine Federstange verbunden. Nachteilig hierbei sind die an der Federstange, die sich während des Regelbetriebes dauernd gegenüber dem Gehäuse axial bewegt, auftretende Reibung und Leckage, wodurch die Regelgenauigkeit und die Betriebssicherheit beeinträchtigt werden und die Lebensdauer wegen des Verschleißes der Dichtungen verkürzt wird.

Durch die Erfindung wird die Aufgabe gelöst, ein Differenzdruck-Regelventil eingangs erwähnter Art zu schaffen und so auszubilden, daß die Federanordnung innerhalb des Ventilgehäuses ohne Beeinträchtigung der Einstellbarkeit angeordnet ist.

Dies wird erfindungsgemäß dadurch erreicht, daß die Federanordnung innerhalb des Reglergehäuses angeordnet ist und mit ihrem dem Ventilsitz abgewandten Ende an den Membrantellern und mit ihrem dem Ventilsitz zugewandten Ende an einem Federteller abgestützt ist, der auf den Gewindeteil einer Stellschraubenspindel, die axial durch die Federanordnung verläuft und die durch die dem Ventilsitz abgewandte Bodenwand des Reglergehäuses abgedichtet aus diesem herausgeführt ist, aufgeschraubt ist und der an einer axial durch die Federanordnung verlaufenden, den Federteller verschiebbar durchgreifenden gehäusefesten Gabel drehfest gehalten ist.

Dadurch, daß der Federteller gegen seine Verdrehung bei dem Drehen der Stellschraubenspindel mittels einer gehäusefesten Gabel festgehalten wird, kann der Federteller ohne Berührung von sich im Betrieb des Regelventils bewegenden Teilen gehalten werden, wodurch während des Betriebs des Regelventils keine der Bewegung der Membran entgegenwirkende Reibung zwischen dem Federteller oder der Gabel und solchen sich bewegenden Teilen des Regelventils auftritt und die Regelgenauigkeit des Ventils erhöht ist.

Da ferner die Stellschraubenspindel sich lediglich bei dem Verstellvorgang gegenüber dem Gehäuse bewegt, kann eine verschleißarme statische Dichtung zwischen der Stellschraubenspindel und der Bodenwand des Reglergehäuses angewendet werden, wodurch eine Leckage ausgeschaltet werden kann.

Wenngleich die Federanordnung, die insbesondere aus mehreren konzentrisch ineinander angeordneten Schraubenfedern bestehen kann, um ihre Baulänge bei dennoch kleiner Federkonstanten zu verkürzen, unterhalb der Membranteller in der Plusdruckkammer angeordnet und beispielsweise über am unteren oder oberen Membranteller festgelegte Streben oder ein solches Rohr an den Membrantellern abgestützt sein kann, wird es in einer Ausgestaltung der Erfindung bevorzugt, daß von dem ventilsitzseitigen Membranteller oder von beiden Membrantellern eine Hohlnabe gebildet wird, in der die Federanordnung angeordnet ist. Bei dieser bevorzugten Ausführungsform ist die Kolbenstange eine Fortsetzung der Hohlnabe des dem Ventilsitz zugewandten Membrantellers bzw. wird wenigstens ein Teil der Hohlnabe von der Kolbenstange gebildet. Durch die Unterbringung der aus wenigstens einer Druckfeder bestehenden Federanordnung in einer solchen Hohlnabe kann die Federanordnung, die mit ihrem dem Ventilsitz abgewandten Ende an einem Innenbund oder -rand des unteren Membrantellers und mit ihrem dem Ventilsitz zugewandten Ende an dem Federteller abgestützt ist, im Inneren des Reglergehäuses angeordnet sein, ohne dessen Baulänge wesentlich zu vergrößern. Im Vergleich mit den bekannten Ausführungsformen mit außerhalb des Reglergehäuses befindlicher Federanordnung läßt sich sogar eine Verringerung der Gesamtbauhöhe des Regelventils erreichen.

Die Gabelschenkel können z.B. aus an der Bodenwand des Reglergehäuses festgelegten Stiften oder dergl. bestehen, die zugeordnete Bohrungen des Federtellers verschiebbar durchgreifen. Bevorzugt wird jedoch, daß die den Federteller durchgreifenden Gabelschenkel die Form von Kreiszylindersegmenten haben, die komplementär gestaltete kreissegmentförmige Durchgangsschlitze des Federtellers gleitend durchgreifen. Hierdurch können die Gabelschenkel nahe an der Stellschraubenspindel konzentrisch zu dieser und der Federanordnung angeordnet sein, wodurch sie eine größtmögliche Steifigkeit bei geringstem Platzbedarf haben. Auch können die Gabelschenkel in dieser Gestaltung von einem einendig doppeltgeschlitzten Rohr ausgebildet sein, welches mit seinem ungeschlitzten Rohrende beispielsweise auf einem von der Bodenwand nach innen abstehenden Zapfen sitzt, durch den die Stellschraubenspindel herausgeführt ist und der auch zur Führung des unteren Membrantellers dienen kann.

Wenn aber die Bodenwand des Reglergehäuses und daher auch der Zapfen z. B. aus Grauguß hergestellt sind, dann kann die Zapfenumfangsfläche nicht ohne weiteres als Führung für den unteren Membranteller benutzt werden. Es müßte vielmehr eine zusätzliche Führungsbuchse aus nichtrostendem Material auf den Zapfen aufgesetzt werden. Um dies zu vermeiden, wird in weiterer Ausgestaltung der Erfindung vorgeschlagen, daß die Gabelschenkel von einer einendig doppeltgeschlitzten Zylinderbuchse ausgebildet sind, welche wie die Gabelschenkel aus nichtrostendem Material, insbesondere aus nicht rostendem Stahl ist und an deren ungeschlitztem Endabschnitt der dem Ventilsitz abgewandte Membranteller zentriert geführt ist.

Die Stellschraubenspindel ist an der Bodenwand des Reglergehäuses abgestützt, um durch ihr Verdrehen das axiale Verstellen des Federtellers zu erreichen. Hierbei kann die Stellschraubenspindel axial fest abgestützt sein, so daß sie ihre Axiallage bei der Verstellung der Kraft der Federanordnung nicht ändert. Dann läßt sich aber die axiale Stellung des im Gehäuse verdeckt angeordneten Federtellers und damit die eingestellte Federkraft nur grob über die Drehstellung der Stellschraubenspindel ablesen. Vorgezogen wird deshalb, daß die Stellschraubenspindel über einen Gewindeabschnitt an der Bodenwand des Reglergehäuses in einer Gewindebohrung abgestützt ist und von den Gewinden des mit dem Innengewinde des Federtellers zusammenwirkenden Gewindeteils und des mit dem Innengewinde der Bodenwand oder einer darin festgelegten Mutter zusammenwirkenden Gewindeabschnittes der Stellschraubenspindel das eine ein Rechtsgewinde und das andere ein Linksgewinde ist. Hierdurch wird beim Drehen der Stellschraubenspindel ein axiales Verstellen sowohl des Federtellers als auch der Stellschraubenspindel herbeigeführt, so daß an der Länge des aus der Bodenwand nach außen herausragenden Spindelteils die axiale Stellung auch des Federtellers abgelesen werden kann. Wenn hierbei die Steigung beider Gewinde gleich ist, bedeutet dies allerdings eine verhältnismäßig lange Dichtfläche für die Abdichtung der Stellschraubenspindel im Reglergehäuse. Daher wird erfindungsgemäß weiter vorgeschlagen, daß die Gewindesteigung des Gewindeabschnittes kleiner als die des Gewindeteils ist. Hierdurch kann die Steigung des Gewindeabschnittes so klein gemacht werden, daß sich die axiale Position der Stellschraubenspindel und damit die Federeinstellung gerade noch deutlich ablesen läßt, ohne daß deswegen eine lange Dichtfläche erforderlich ist.

Bevorzugt ist das Linksgewinde an dem Gewindeabschnitt ausgebildet.

Zusätzlich oder alternativ zu der vorstehend beschriebenen Ausführungsform können zur Verbesserung der Verstellgenauigkeit die Gewindesteigung des Gewindeteils bzw. die Gewindesteigungen des Gewindeteils und des Gewindeabschnitts der Stellschraubenspindel, die Federkonstante der Federanordnung und die wirksame Fläche der Membran derart aneinander angepaßt sein, daß jede volle Umdrehung der Stellschraubenspindel einer nur einziffrigen Änderung des Drucksollwertes des Ventils unter oder über Null entspricht. Hierdurch läßt sich durch die Anzahl der Drehungen der Stellschraubenspindel eine vorbestimmte Drucksollwertänderung entsprechend der durch die charakteristische Ziffer als Druckeinheit, z.B. Bar, wiedergegebenen Druckstufen genau einstellen. Vorzugsweise beträgt diese charakteristische Ziffer 1, sie kann aber beispielsweise auch 2, 3, 0,1, 0,01, 0,002 usw. betragen.

Bei bekannten membrankolbenentlasteten Reglern der vorliegenden Art sitzt die als O-Ringdichtung ausgebildete Dichtung der Kolbenstange in einer dreiseitig begrenzten Ringnut mit möglichst enger Passung, um die Verformung des O-Rings im Interesse einer weitestgehenden Verringerung der Reibung möglichst kleinzuhalten. Solche dreiseitig begrenzten Ringnuten lassen sich jedoch nur schwierig in engen Toleranzen genau bearbeiten und messen. Daher wird erfindungsgemäß weiter vorgeschlagen, daß die O-Ringdichtung in einer zur Stirnfläche der Gehäusewand der Minusdruckkammer einseitig axial offenen und von dieser Gehäusewand axial begrenzten Ringnut eines in das Gehäuse fest eingesetzten Ringes sitzt. Eine solche nur zweiseitig begrenzte Ringnut läßt sich einfach bearbeiten und messen. Die Abdichtung an der dritten Nutseite erfolgt an der Stirnfläche der in das eigentliche Ventilgehäuse abgedichtet eingeschraubten Gehäusewand des Reglergehäuses.

Vorzugsweise ist dem erfindungsgemäßen Differenzdruck-Regelventil eine Maßnahme zur Hubbegrenzung des Ventiltellers und auch zum vollständigen Absperren des Ventils getroffen. Hierzu kann insbesondere beidseitig der Stellschraubenspindel je eine Stellschraube durch die Bodenwand des Reglergehäuses abgedichtet hindurchgeschraubt sein, von denen die eine Stellschraube zur Hubbegrenzung des Ventiltellers und die andere Stellschraube zum vollständigen Absperren des Regelventils mit dem dem Ventilsitz abgewandten Membranteller zusammenwirkt.

Die Erfindung wird im folgenden anhand aus der Zeichnung ersichtlicher Ausführungsformen erläutert. In der Zeichnung zeigt:
- Fig. 1: den Längsschnitt eines erfindungsgemäßen Differenzdruck-Regelventils,
- Fig. 2: ein Detail des Regelventils aus Fig. 1, nämlich dessen von einer Gabel drehfest gehaltenen Federtellers zur Abstützung der verstellbaren Federanordnung im Längsschnitt,
- Fig. 3: den Federteller aus Fig. 2 in der Draufsicht, und
- Fig.4: eine andere vorteilhafte Ausführungsform des Verstellmechanismus der Federanordnung im Längsschnitt.

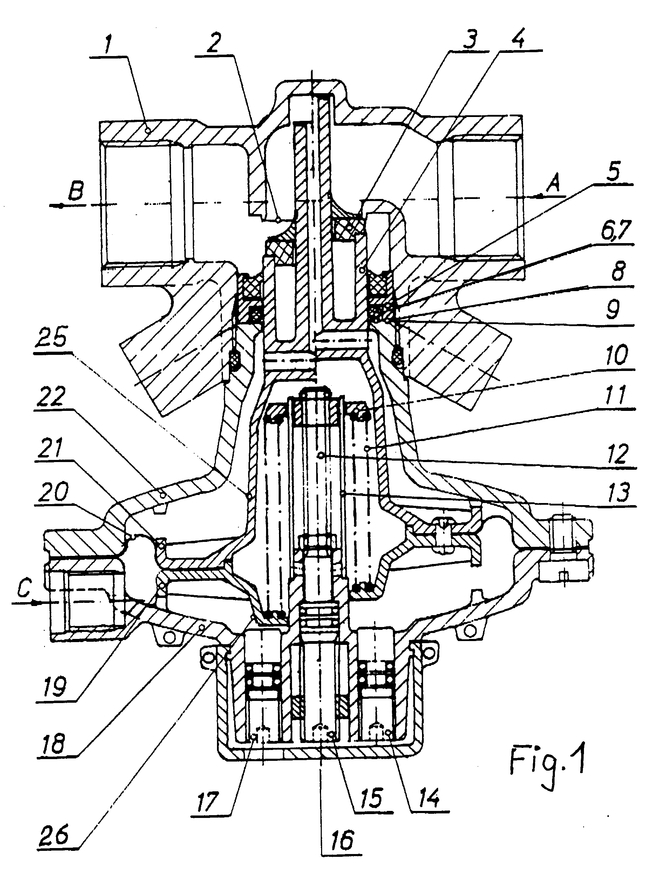

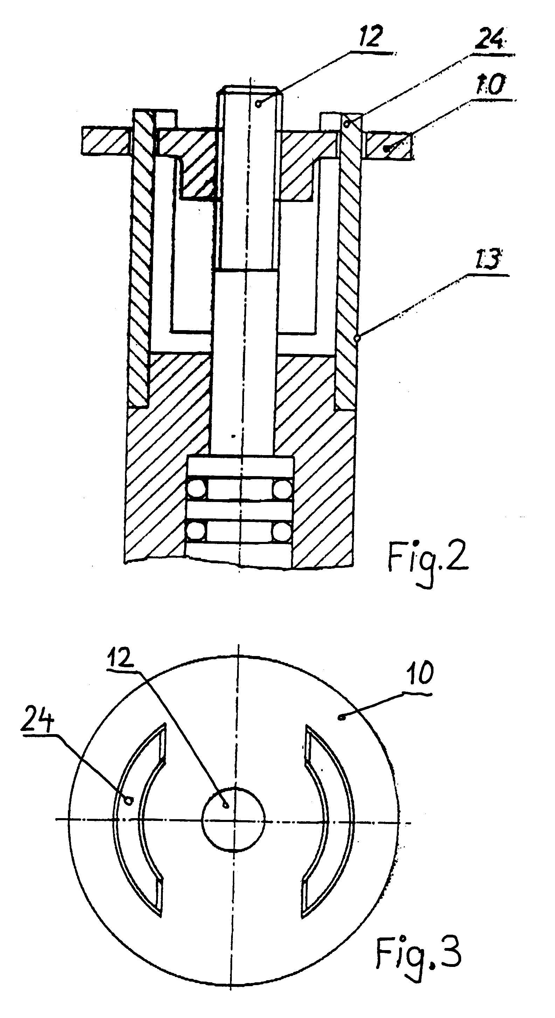

Im oberen Teil des aus Fig.1 ersichtlichen membrangesteuerten Differenzdruck-Regelventils mit dem Reglergehäuse 1 ist ein Durchgangsventil mit dem Ventilsitz 2 und dem mit diesem zusammenwirkenden Ventilteller 3 ausgebildet, der über eine Kolbenstange 4 mit einer im unteren Teil des Reglergehäuses 1 innen zwischen einem oberen Membranteller 21 und einem unteren Membranteller 19 und außen zwischen miteinander verschraubten Gehäuseflanschen eingespannten Membran 20 verbunden ist, von welcher der Reglerteil des Ventils in eine obere Minusdruckkammer und eine untere Plusdruckkammer unterteilt wird. Die Minusdruckkammer, die von der Gehäusewand 22 umgrenzt wird, ist über eine die Kolbenstange 4 durchsetzende Impulsleitung mit dem Raum vor dem Ventilsitz 2 verbunden, wohingegen der Plusdruck von der von dem Regelventil geregelten Anlage in Richtung des Pfeils C in die von der Bodenwand 18 des Reglergehäuses 1 umgrenzte Plusdruckkammer zugeführt wird. Von den Membrantellern 19, 21 wird eine Hohlnabe 25, 26 gebildet, deren oberer Hohlnabenteil 25 von der Kolbenstange 4 verlängert wird und deren unterer Hohlnabenteil 26 an einem zentralen Zapfen der Bodenwand 18 geführt ist. In der Hohlnabe 25, 26 ist eine aus konzentrischen Schraubendruckfedern bestehende Federanordnung 11 angeordnet, die mit ihrem unteren Ende auf dem Innenbund des unteren Membrantellers 26 und mit ihrem oberen Ende an einem Federteller 10 abgestützt ist, der ohne Berührung mit der ihn umgebenden Hohlnabenwand mit seinem zentralen Innengewinde auf eine Stellschraubenspindel 12 aufgeschraubt ist, die entlang der Achse der Federanordnung 11 nach unten verläuft und aus der Bodenwand 18 des Reglergehäuses 1, in der sie gegen eine axiale Verlagerung nach oben abgestützt ist, abgedichtet nach unten herausgeführt ist. Auf dem Innenzapfen der Bodenwand 18 sitzt eine an diesem festgelegte Gabel 13, die entsprechend der Figuren 2 und 3 mit ihren hohlzylindersegmentförmigen, einander diametral gegenüberstehenden Gabelschenkeln 24 im Federteller 10 ausgebildete komplementäre Durchgangsschlitze 23 verschiebbar durchgreift.

Da somit der Federteller 10 mittels der gehäusefesten Gabelschenkel 24 an einer Drehung gehindert ist, wird der Federteller 10 beim Drehen der Stellschraubenspindel 12, die hierzu an ihrem unteren Ende 15 z.B. mit einem Innensechskant 16 versehen ist, axial verlagert und ändert damit die Einstellung der Federanordnung 11 und damit den Sollwertdruck des Regelventils. Die Stellschraubenspindel 12 ist auch an ihrem unteren Ende mit einem Gewinde versehen, auf welches eine Mutter aufgeschraubt ist, die in der Bodenwand drehfest, jedoch axial verschiebbar geführt ist, so daß die Einstellung der Federanordnung 11 an der axialen Stellung der Mutter abgelesen werden kann.

Beidseitig der Stellschraubenspindel 12 ist in die Bodenwand 18 des Reglergehäuses 1 je eine Stellschraube 14, 17 eingeschraubt, die mit dem Innenbund des unteren Hohlnabenteils 26 des unteren Membrantellers 19 zur Hubbegrenzung des Ventiltellers 3 bzw. zum vollständigen Absperren des Ventils zusammenwirkt.

Zur Abdichtung der Kolbenstange 4 gegenüber dem Reglergehäuse 1 ist rings dieser ein Ring 5 in das Gehäuse eingepaßt, der an seinem unteren Ende eine zweiseitig begrenzte Innenringnut 7 zur Aufnahme einer O-Ring-Dichtung aufweist, an der die Kolbenstange 4 abdichtend anliegt. Die dritte Seite der Ringnut 7 wird von der Stirnfläche 9 der die Minusdruckkammer umgrenzenden Gehäusewand 22 gebildet, die bis zum Anliegen an der unteren Stirnfläche 8 des Ringes 5 in den oberen Teil des Reglergehäuses 1 abgedichtet hineingeschraubt ist.

Das Strömungsmedium tritt in Richtung des Pfeils A in das Reglergehäuse 1 ein, strömt durch den Ventilsitz 2 und tritt in Richtung des Pfeils B aus. Der MINUS-Druck wirkt über die Impulsleitung in der Kolbenstange 4 auf die obere Seite der Membran 20 und will gemeinsam mit der Federanordnung 11 die Membran 20 nach unten bewegen und damit den Ventilsitz 2 öffnen. Gleichzeitig wirkt das Strömungsmedium mit dem PLUS-Druck in der unteren Membrankammer auf die untere Seite der Membran 20 und will den Ventilsitz 2 schließen. Die Öffnungsstellung des Ventiltellers 3 wird somit aus dem Differenzdruck des Strömungsmediums über die von dem Ventil geregelte Anlage hin und der einstellbaren Kraft der Federanordnung 11 bestimmt.

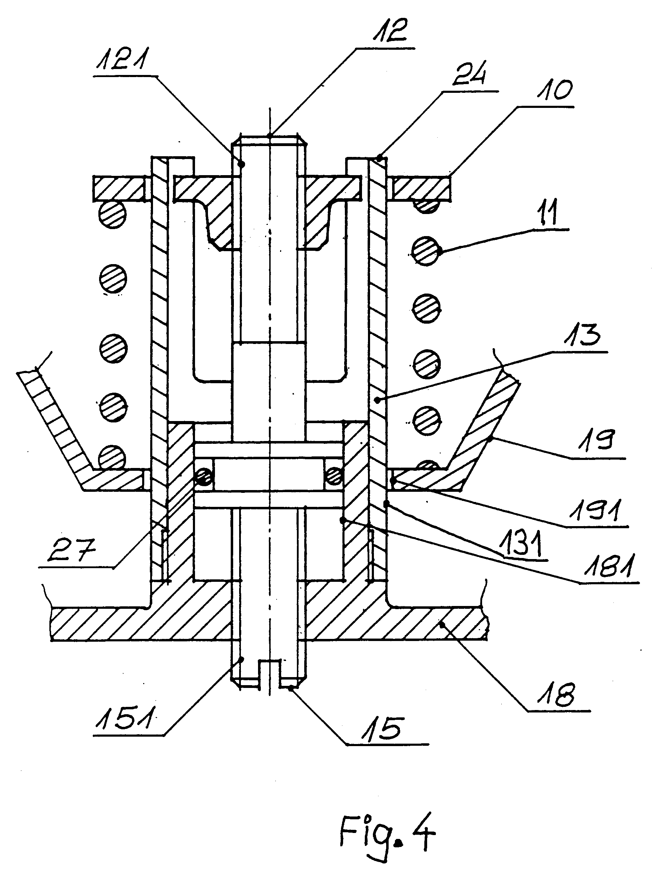

Aus Fig. 4 ist eine abgewandelte Ausführungsform des Verstellmechanismus für die Federanordnung 11 ersichtlich. Hier weist die mit ihrem oberen Gewindeteil 121 den Federteller 10 durchgreifende Stellschraubenspindel 12 auch an ihrem unteren Endabschnitt 15 einen Gewindeabschnitt 151 auf, der eine angepaßte Gewindebohrung in der Bodenwand 18 durchgreift. Das Gewinde des Gewindeteils 121 und der zugehörigen Gewindebohrung im Federteller 10 ist als Rechtsgewinde ausgebildet und das Gewinde des Gewindeabschnitts 151 und der zugehörigen Gewindebohrung in der Bodenwand 18 ist als Linksgewinde mit einer sehr viel kleineren Gewindesteigung als derjenigen des Gewindeteils 121 ausgebildet. Die Stellschraubenspindel 12 ist zwischen dem Gewindeteil 121 und dem Gewindeabschnitt 151 in einem Hohlzapfen der Bodenwand 18 an dessen als Dichtfläche 181 ausgebildeten Innenumfangsfläche abgedichtet geführt. Die den Federteller 10 mit ihren Gabelschenkeln 24 drehfest haltende, aus rostfreiem Material bestehende Gabel 13 bildet mit ihrem unteren Enabschnitt als untere Fortsetzung der Gabelschenkel 24 eine Zylinderbuchse 131, die an der Außenumfangsfläche des Hohlzapfens zentriert festgelegt ist und auf der der untere Membranteller 19 mit seiner Gleitfläche 191 zentriert geführt wird.

Bei dieser Ausführungsform aus Fig. 4 kann daher der eingestellte Solldruckwert in Kenntnis des Verhältnisses der Gewindesteigungen des Gewindeteils 121 und des Gewindeabschnittes 151 an der Länge des über die Bodenwand 18 nach außen überstehenden Endes 15 der Stellschraubenspindel abgelesen werden, wozu eine Skala vorgesehen sein kann.

## Patentansprüche

1. Membrangesteuertes Differenzdruck-Regelventil insbesondere für Warmwasser-Heizungsanlagen, mit einem Reglergehäuse (1), in dem ein mit einem Ventilsitz (2) zusammenwirkender Ventilteller (3) über eine am Reglergehäuse (1) über eine Dichtung (6) abgedichtet geführte Kolbenstange (4) mit einer zwischen Membrantellern (19, 21) eingespannten Membran (20) verbunden ist, von welcher eine Gehäusekammer in eine ventilsitzseitige Minusdruckkammer und eine Plusdruckkammer, die mit dem Raum vor dem Ventilsitz bzw. mit der von dem Regelventil geregelten Anlage verbunden sind, unterteilt wird und welche von einer einstellbaren Federanordnung (11) in der dem Ventilsitz (2) abgewandten Richtung belastet ist, dadurch gekennzeichnet, daß die Federanordnung (11) innerhalb des Reglergehäuses (1) angeordnet ist und mit ihrem dem Ventilsitz (2) abgewandten Ende an den Membrantellern und mit ihrem dem Ventilsitz (2) zugewandten Ende an einem Federteller (10) abgestützt ist, der auf den Gewindeteil (121) einer Stellschraubenspindel (12), die axial durch die Federanordnung verläuft und durch die dem Ventilsitz (2) abgewandte Bodenwand (18) des Reglergehäuses (1) abgedichtet aus diesem herausgeführt ist, aufgeschraubt ist und der an einer axial durch die Federanordnung (11) verlaufenden, den Federteller (10) verschiebbar durchgreifenden gehäusefesten Gabel (13) drehfest gehalten ist.

2. Membrangesteuertes Differenzdruck-Regelventil nach Anspruch 1, dadurch gekennzeichnet, daß von dem ventilsitzseitigen Membranteller (21) oder von beiden Membrantellern (19, 21) eine Hohlnabe (25, 26) gebildet wird, in der die Federanordnung (11) angeordnet ist.

3. Membrangesteuertes Differenzdruck-Regelventil nach Anspruch 1 oder 2, dadurch gekennzeichnet, daß die den Federteller (10) durchgreifenden Gabelschenkel (24) die Form von Kreiszylindersegmenten haben.

4. Membrangesteuertes Differenzdruck-Regelventil nach Anspruch 3, dadurch gekennzeichnet, daß die Gabelschenkel (24) axial an einer Zylinderbuchse (131) ausgebildet sind, an welcher der dem Ventilsitz (2) abgewandte Membranteller (19) zentriert geführt ist.

5. Membrangesteuertes Differenzdruck-Regelventil nach einem der Ansprüche 1-4, dadurch gekennzeichnet, daß die Stellschraubenspindel (12) über einen Gewindeabschnitt (151) an der Bodenwand (18) des Reglergehäuses (1) in einer Gewindebohrung abgestützt ist und von den Gewinden des Gewindeteils (121) und des Gewindeabschnittes (151) das eine ein Rechtsgewinde und das andere ein Linksgewinde ist.

6. Membrangesteuertes Differenzdruck-Regelventil nach Anspruch 5, dadurch gekennzeichnet, daß die Gewindesteigung des Gewindeabschnittes (151) kleiner als die des Gewindeteils (121) ist.

7. Membrangesteuertes Differenzdruck-Regelventil nach Anspruch 5 oder 6, dadurch gekennzeichnet, daß das Linksgewinde an dem Gewindeabschnitt (151) ausgebildet ist.

8. Membrangesteuertes Differenzdruck-Regelventil nach einem der Ansprüche 1-7, dadurch gekennzeichnet, daß die Gewindesteigung bzw. Gewindesteigungen, die Federkonstante der Federanordnung (11) und die wirksame Fläche der Membran (20) derart aneinander angepaßt sind, daß jede volle Umdrehung der Stellschraubenspindel (12) einer nur einziffrigen Änderung des Drucksollwertes des Ventils unter oder über Null entspricht.

9. Membrangesteuertes Differenzdruck-Regelventil nach einem der Ansprüche 1-8, dadurch gekennzeichnet, daß die als O-Ringdichtung ausgebildete Dichtung (6) der Kolbenstange (4) in einer zur angrenzenden Stirnfläche der Gehäusewand (22) der Minusdruckkammer einseitig axial offenen Ringnut (7) eines in das Reglergehäuse (1) eingesetzten Ringes (5) sitzt.

10. Membrangesteuertes Differenzdruck-Regelventil nach einem der Ansprüche 1-9, dadurch gekennzeichnet, daß beidseitig der Stellschraubenspindel (12) je eine Stellschraube (14, 17) durch die Bodenwand (18) des Reglergehäuses (1) abgedichtet hindurchgeschraubt ist, von denen die eine Stellschraube (14) zur Hubbegrenzung des Ventiltellers (3) und die andere Stellschraube (17) zum vollständigen Absperren des Regelventils mit dem dem Ventilsitz (2) abgewandten Membranteller (19) zusammenwirkt.

## Claims

1. Diaphragm controlled differential pressure control valve especially for hot-water heating plants, comprising a controller housing (1), in which a valve disk (3) cooperating with a valve seat (2) is connected by a piston rod (4), guided in a sealed manner at the controller housing (1) by a sealing (6), with a diaphragm (20) clamped between diaphragm discs (19, 21), by which diaphragm a housing chamber is subdivided into a minus pressure chamber at the valve side and a plus pressure chamber, which are connected to the space in front of the valve seat and to the plant controlled by the control valve, respectively, and which diaphragm is loaded by an adjustable spring arrangement (11) into the direction away from the valve seat (2), characterized in that the spring arrangement (11) is disposed within the controller housing (1) and is supported with its end facing away from the valve seat (2) at the diaphragm disks and with its end facing to the valve seat (2) at a spring retainer (10) being screwed on the threaded part (121) of an adjusting spindle (12) axially extending through the spring arrangement and being guided in a sealed manner out of the controller housing through the bottom wall (18) of the controller housing (1) facing away from the valve seat, the spring retainer being held against rotation by a fork (13) being fixed to the housing and axially extending through the spring arrangement (11) and slidingly passing through the spring retainer (10).

2. Diaphragm controlled differential pressure control valve according to claim 1, characterized in that a hollow hub (25, 26), in which the spring arrangement (11) is disposed, is formed by the diaphragm disk (21) facing the valve seat or by both of the diaphragm disks (19, 21).

3. Diaphragm controlled differential pressure control valve according to claim 1 or 2, characterized in that the fork legs (24) passing through the spring retainer (10) have the shape of circular cylinder segments.

4. Diaphragm controlled differential pressure control valve according to claim 3, characterized in that the fork legs (24) are axially formed at a cylinder sleeve (131) by which the diaphragm disk (19) facing away from the valve seat (2) is guided in a centered manner.

5. Diaphragm controlled differential pressure control valve according to one of claims 1 to 4, characterized in that the adjusting spindle (12) is supported at the bottom wall (18) of the controller housing (1) in a threaded bore by a threaded section (151) and that one of the threads of the threaded part (121) and of the threaded section (151) is a right-hand thread and the other is a left-hand thread.

6. Diaphragm controlled differential pressure control valve according to claim 5, characterized in that the thread pitch of the threaded section (151) is smaller than that of the threaded part (121).

7. Diaphragm controlled differential pressure control valve according to claim 5 or 6, characterized in that the left-hand thread is formed on the threaded section (151).

8. Diaphragm controlled differential pressure control valve according to one of claims 1 to 7, characterized in that the thread pitch resp. the thread pitches, the spring rate of the spring arrangement (11) and the effective surface of the diaphragm (20) are adapted to eachother in such a way that each full revolution of the adjusting spindle (12) corresponds to an only one-digit change of the nominal pressure value of the valve above or below zero.

9. Diaphragm controlled differential pressure control valve according to one of claims 1 to 8, characterized in that the sealing (6) of the piston rod (4) being formed as an O-ring sealing is seated in an annular groove (7) of a ring (5) inserted into the controller housing (1), the groove being one-sidedly axially open towards the adjacent face of the housing wall (22) of the minus pressure chamber.

10. Diaphragm controlled differential pressure control valve according to one of claims 1 to 9, characterized in that at each of both sides of the adjusting spindle (12) an adjusting screw (14, 17) is screwed in a sealing manner through the bottom wall (18) of the controller housing (1), one adjusting screw (14) of the adjusting screws cooperating with the diaphragm disk (19) facing away from the valve seat (2) to limit the stroke of the valve disk (3) and the other adjusting screw (17) to completely close the control valve.

## Revendications

1. Valve de réglage à pression différentielle et à commande par membrane, en particulier pour des installations de chauffage à eau chaude, comprenant un corps de réglage (1) dans lequel un clapet de valve (3) coopérant avec un siège de valve (2) est relié, par une tige de piston (4) guidée dans le corps de réglage (1) de façon étanche par un joint d'étanchéité (6), à une membrane (20) serrée entre des plateaux de membrane (19, 21), cette membrane séparant une chambre de corps en une chambre à pression négative du côté du clapet et en une chambre à pression positive, ces chambres étant reliées respectivement à l'espace devant le siège de clapet et à l'installation contrôlée par la valve de réglage, et la membrane étant sollicitée, par un agencement élastique réglable (11), dans la direction opposée au siège de clapet (2), caractérisée en ce que l'agencement élastique (11) est disposé à l'intérieur du corps de réglage (1) et est en appui, par son extrémité opposée au siège de clapet (2) sur le plateau de membrane et, par son extrémité tournée vers le siège de membrane (2), sur un plateau de ressort (10) qui est vissé sur la partie filetée (121) d'une broche filetée de réglage (12) qui traverse axialement l'agencement élastique, et qui est guidée de façon étanche vers l'extérieur à travers la paroi de fond (18) du corps de réglage opposée au siège de clapet (2) et qui est vissée sur cette paroi, cette broche étant rendue solidaire en rotation d'une fourche (13) solidaire du corps et traversant axialement l'agencement élastique (11), et traversant de façon coulissante le plateau de ressort (10) en étant engagé dans ce plateau

2. Valve de réglage à pression différentielle et à commande par membrane selon la revendication 1, caractérisée en ce qu'à partir du plateau de membrane (21) du côté du siège de clapet ou des deux plateaux de membrane (19, 21), est formé un moyeu creux (25, 26), dans lequel est disposé l'agencement élastique (11).

3. Valve de réglage de pression différentielle et à commande par membrane selon la revendication 1 ou 2, caractérisée en ce que la branche de fourche (24) traversant le plateau de ressort (10) présente la forme de segments de cylindre circulaire.

4. Valve de réglage à pression différentielle et à commande par membrane selon la revendication 3, caractérisée en ce que les branches de fourche (24) sont formées axialement sur un manchon cylindrique (131) sur lequel le plateau de membrane (19) opposé au siège de clapet (2) est guidé de façon centrée.

5. Valve de réglage à pression différentielle et à commande par membrane selon l'une des revendications 1 à 4, caractérisée en ce que la broche filetée de réglage (12) est en appui par un tronçon fileté (151) sur la paroi de fond (18) du corps de réglage (1) dans un alésage fileté, et en ce qui concerne les filetages de la pièce filetée (121) et du tronçon fileté (151), l'un est un pas à droite et l'autre est un pas à gauche.

6. Valve de réglage à pression différentielle et à commande par membrane selon la revendication 5, caractérisée en ce que le pas du filetage du tronçon fileté (151) est plus petit que celui de la pièce filetée (121).

7. Valve de réglage à pression différentielle et à commande par membrane selon la revendication 5 ou 6, caractérisée en ce que le pas à gauche est réalisé sur le tronçon fileté (151).

8. Valve de réglage à pression différentielle et à commande par membrane selon l'une des revendications 1 à 7, caractérisée en ce que le ou les pas de filetage, la constante élastique de l'agencement élastique (11) et la surface effective de la membrane (20) sont agencés respectivement de telle façon que chaque tour complet de la broche filetée de réglage (12) ne corresponde qu'à une variation fractionnaire de la valeur de consigne de pression de la valve en-dessous ou en-dessus de zéro.

9. Valve de réglage à pression différentielle et à commande par membrane selon l'une des revendications 1 à 8, caractérisée en ce que le joint d'étanchéité (6) de la tige de piston (4), réalisé sous la forme d'un joints thorique d'étanchéité, est logé dans un rainure annulaire (7) d'une bague (5) insérée dans le corps de réglage (1), cette rainure annulaire étant ouverte axialement d'un côté sur la surface frontale de délimitation de la paroi de boîtier (22) de la chambre à pression négative.

10. Valve de réglage à pression différentielle et à commande par membrane selon l'une des revendications 1 à 9, caractérisée en ce que de chacun des deux côtés de la broche filetée de réglage (12), est vissée une vis de réglage (14, 17) qui traverse de façon étanche la paroi de fond (18) du corps de réglage (1), l'une des vis de réglage (14) coopérant avec le plateau de membrane (19) opposé au siège de clapet (2) pour réaliser la limitation de course du clapet de valve membrane (3) et l'autre vis de réglage (17) coopérant avec le plateau le plateau de membrane (19) opposé au siège de clapet (2) pour réaliser la fermeture complète de la valve de réglage.
